# EUROPÄISCHE PATENTSCHRIFT

(11) **EP 1 069 075 B1**
(45) Veröffentlichungstag und Bekanntmachung des Hinweises auf die Patenterteilung: **16.06.2004**
(21) Anmeldenummer: 00109301.2
(22) Anmeldetag: 29.04.2000
(51) Int. Cl.: C01G 45/00, H01M 4/48

(54) **Verfahren zur Herstellung von Lithiumspinellen**
Method for producing lithium spinell
Methode de préparation de spinell contenant du lithium

(30) Priorität: 14.07.1999 DE 19932750
(43) Veröffentlichungstag der Anmeldung: 17.01.2001
(73) Patentinhaber: VARTA Automotive Systems GmbH, 30419 Hannover (DE)
(72) Erfinder: Voss, Heinz-Joachim, 65843 Sulzbach (DE)
(74) Vertreter: Lins, Edgar, Dipl.-Phys. Dr.jur.

(56) Entgegenhaltungen:
- WO-A-98/50308
- US-A- 5 738 957
- US-A- 5 763 120
- J. KIM, A. MANTHIRAM: "Low Temperaute Synthesis and Electrode Properties of Li4Mn5O12" JOURNAL OF THE ELECTROCHEMICAL SOCIETY. , Bd. 145, Nr. 14, 1998, Seiten l53-l55, XP002151975 & S. CHOI, A. MANTHIRAM: "Synthesis and Electrode Properties of Metastable Li2Mn4O9-d Spinel Oxides" JOURNAL OF THE ELECTROCHEMICAL SOCIETY. , Bd. 147, Nr. 5, 2000, Seiten 1523-1629,
- PATENT ABSTRACTS OF JAPAN vol. 016, no. 112 (E-1180), 19. März 1992 (1992-03-19) & JP 03 285262 A (MATSUSHITA ELECTRIC IND CO LTD), 16. Dezember 1991 (1991-12-16)
- DATABASE CHEMABS [Online] CHEMICAL ABSTRACTS SERVICE, COLUMBUS, OHIO, US; UEHARA, MAYUMI ET AL: "Nonaqueous electrolyte lithium secondary battery with mixed oxide cathode for long cycle life" retrieved from STN Database accession no. 127:97550 CA XP002151976 & JP 09 147863 A (SANYO ELECTRIC CO., LTD., JAPAN) 6. Juni 1997 (1997-06-06)

## Beschreibung

Die Erfindung betrifft ein Verfahren zur Herstellung von ternären Lithiumspinellen.

Wiederaufladbare Lithium-Ionen-Batterien sind wegen ihrer hohen gravimetrischen und volumetrischen Energiedichte für eine Vielzahl von batteriebetriebenen oder -unterstützten Anwendungen in tragbaren elektronischen Geräten wie Videokameras, Laptop-Computem, ortsungebundenen Telefonen aber auch für zukünftige Kraftfahrzeugausrüstungen interessant.

Das aus gravimetrischen und volumetrischen Gründen für die erzielbare Energiedichte besonders interessante elementare Lithium als Anodenmaterial ist bekanntermaßen aufgrund von Dendritenbildungen beim Lade- und Entladevorgang mit einer unzureichenden Zyklenstabilität der Zellen und einem erheblichen Sicherheitsrisiko verbunden.

Als Alternative dazu wurde das System der "Lithium-Ionen-" oder auch "rocking chair-" genannten Batterie entwickelt, bei der Elektrodenmaterialien verwendet werden, die Lithium reversibel sowohl in der Kathode als auch der Anode interkalieren können. Üblicherweise werden ein kohlenstoffhaltiges Material als Anode und ein lithiumhaltiges Mischoxid als Kathodenmaterial eingesetzt.

Die derzeit bevorzugten aktiven Kathodenmaterialien sind lithiumhaltige Schichtoxide von Cobalt, Nickel, oder Mischoxiden dieser Metalle. Mit den bekannten Kathodenmaterialien lassen sich zwar galvanische Zellen herstellen, die hohe Energiedichten und brauchbare Zyklenstabilität besitzen, aber es besteht weiterhin der Bedarf nach kostengünstigeren und toxisch unbedenklicheren Kathodenmaterialien. Weiterhin ist durch den systembedingten Verbrauch eines Teils der mit dem Kathodenmaterial eingebrachten Lithiummenge für eine sogenannte Deckschichtbildung auf dem Anodenmaterial eine ungleiche Bilanzierung der aktiven Materialien notwendig, die nur durch spezielle Maßnahmen, wie sie z.B. in den Dokumenten EP-A 201 038, US-A 5,162,176 oder DE-A 195 28 049 beschrieben werden, teilweise ausgeglichen werden können.

Aus dem Dokument DE-A 44 35 117 und den darin zitierten Schriften sind ternäre Lithium-Mangan-Mischoxide und Verfahren zu deren Herstellung bekannt, die als kostengünstige, nichttoxische Alternative zu den Cobalt- und/oder Nickelverbindungen verwendet werden können. Diese bekannten Mischoxide sollen zu zyklenstabilen Elektrodenmaterialien führen, die jedoch aufgrund ihres beschränkten Lithiumgehaltes keine ausreichende Kompensation des Verlustes an zyklisierbaren Lithium zulassen. Weiterhin ist zur Ausbildung der gewünschten reinen Spinellkristallstruktur eine Phasenumwandlung durch eine Hochtemperaturbehandlung erforderlich.

Die Erfindung hat sich die Aufgabe gestellt, ein Verfahren zur Herstellung von ternären Lithium-Mangan-Spinellen anzugeben.

Die Aufgabe wird erfindungsgemäß durch ein Verfahren gemäß Anspruch 1 dieser Schrift gelöst. Weitere vorteilhafte Ausgestaltungen des Verfahrens sind in den Ansprüchen 2 bis 6 dargelegt.

Das erfindungsgemäße Verfahren zeichnet sich dadurch aus, daß die gewünschte reine Spinellkristallstruktur schon im Fällungsprodukt erhalten wird und damit keine Hochtemperaturphasenumwandlung notwendig ist. Weiterhin kann durch die Wahl des Impfkristalls und des Dotierungsmaterials der Lithiumgehalt des erfindungsgemäß erhältlichen ternäre Lithium-Mangan-Spinelle in weiten Bereichen variiert werden.

Vorzugsweise werden zur Herstellung der ternären Lithium-Mangan-Spinelle nach dem erfindungsgemäßen Verfahren wasserlösliche Mangansalze wie Mangansulfat, Manganchlorid, Manganacetat, Mangannitrat oder ein Gemisch dieser Salze eingesetzt.

Dabei wird bevorzugt ein Oxidationsmittel wie Wasserstoffperoxid, Natriumperoxid, Natriumcarbonat-Peroxohydrat oder Kaliumperoxidisulfat in Mengen von 1,5 bis 2,0 Mol-% bezogen auf die Menge an eingesetzten Mn²⁺-Ionen verwendet.

Als Impfkristalle werden Aktivkohle, feinverteiltes SiO₂ (Aerosil, pyrogene Kieselsäure), Spinelle, insbesondere Lithium-Mangan-Spinelle, vorzugsweise solche mit einer mittleren Korngröße von 0,01 bis 30 µm eingesetzt.

Besonders bevorzugt werden der wäßrigen Mangansalzlösung als Dotierungsmaterial mindestens ein Metallkation ausgewählt aus der Gruppe Co, V, Pb, Cr, Ti, Bi oder Sn in Mengen von 2 bis 10 Mol-% bezogen auf die Menge an eingesetzten Mn²⁺-Ionen zugesetzt.

Beim erfindungsgemäßen Verfahren wird vorzugsweise der getrocknete Niederschlag des erhaltenen Lithium-Mangan-Spinells bei 350 bis 600°C über 1 bis 6 Stunden getempert.

Nach dem erfindungsgemäßen Verfahren hergestellte Spinelle besitzen die allgemeine Formel Liₐ Mn_{2-b}O_{c}.

Nach dem Verfahren erhältliche ternäre Lithium-Mangan-Spinelle besitzen die allgemeine Formel LiₐMe_{b}Mn_{2-b}O_{c}, in der Me ein Metall aus der Gruppe IVa oder Va des Periodensystems und 1,0 < a <1,8, 0,005 < b < 0,25 sowie 4,0 ≤ c <4,8 bedeuten.

Bevorzugte ternäre Lithium-Mangan-Spinelle sind Li_{1,37}Pb_{0,05}Mn_{1,95}O_{c}, Li_{1,35}Bi_{0,05}Mn_{1,95}O_{c} und Li_{1,64}Sn_{0,17}Mn_{1,83}O_{c}.

Das erfindungsgemäße Verfahren wird nachfolgend anhand eines Beispiels näher erläutert. Weitere Versuchsbedingungen und die danach erhaltenen Verbindungen sind in Tabelle 1 aufgeführt.

### Beispiel

Einer ersten Lösung, bestehend aus 20 g Lithumhydroxid (LiOH), gelöst in 1200 ml Wasser und auf 80°C erhitzt, werden 200 mg Aktivkohle zugesetzt. Zu einer zweiten Lösung bestehend aus 46,4 g Manganacetat (MnAc in Tabelle 1) gelöst in 400 ml H₂O, werden 1ml konzentrierte Essigsäure sowie 50 ml Wasserstoffperoxid (30 Gew.%) hinzugefügt. Anschließend wird die zweite Lösung in die heiße erste Lösung eingetropft.

Es fällt ein dunkelbrauner Niederschlag aus, der über einen Weißband-Filter abfiltriert, kurz gewaschen und im Trockenschrank bei 80°C getrocknet wird.

Der getrocknete Niederschlag wird bei 400 bis 550°C eine Stunde getempert. Das so erhaltene Produkt mit der Zusammensetzung Li_{1,14}Mn₂O_{4,4} zeigt im Röntgendiffraktogramm das für die Spinellstruktur typische Beugungsmuster. Die erhaltene Probe besitzt eine elektrochemische Kapazität von ca. 90 mAh/g.

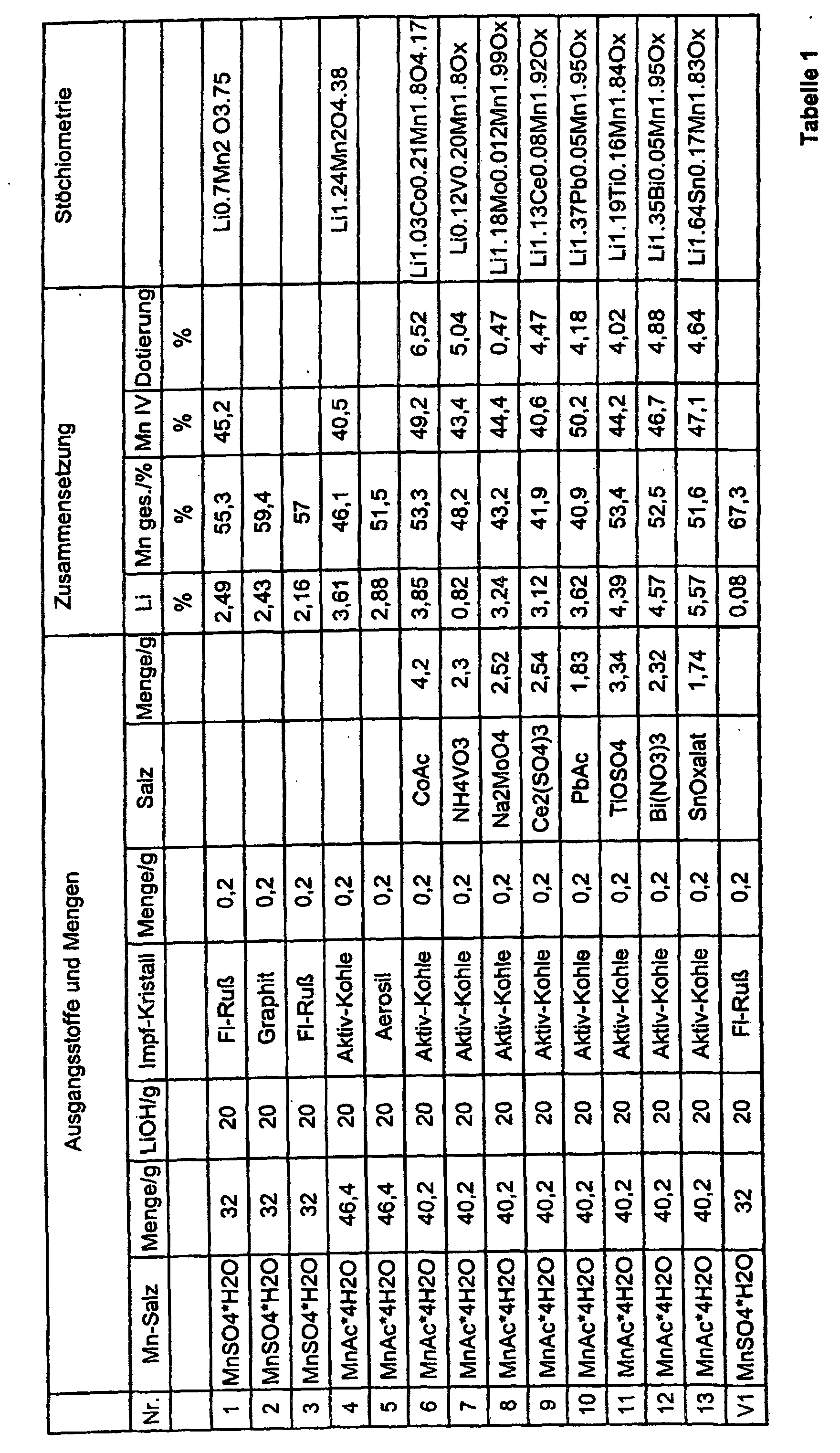

## Patentansprüche

1. Verfahren zur Herstellung von ternären Lithium-Mangan-Spinellen durch Fällung aus wässrigen Mangansalzlösungen, **dadurch gekennzeichnet, dass** ein Mangansalz in Wasser gelöst, mit einem Oxidationsmittel versetzt, einer wässrigen Lithiumhydroxidlösung, die 0,1 bis 1 Gew. % Impfkristalle bezogen auf den Anteil an eingesetztem LiOH ausgewählt aus der Gruppe Aktivkohle, Aerosil oder Spinell enthält, zugesetzt, der Niederschlag abgetrennt, gewaschen und getempert wird.

2. Verfahren nach Anspruch 1, **dadurch gekennzeichnet, dass** als wasserlösliches Mangansalz Mangansulfat, Manganchlorid, Manganacetat, Mangannitrat oder ein Gemisch dieser Salze eingesetzt wird.

3. Verfahren nach Anspruch 1 oder 2, **gekennzeichnet durch** die Verwendung von Wasserstoffperoxid, Natriumperoxid, Natriumcarbonatperoxohydrat oder Kaliumperoxidisulfat in Mengen von 1,5 bis 2,0 Mol-% bezogen auf die Menge der eingesetzten Mn²⁺-Ionen als Oxidationsmittel.

4. Verfahren nach einem oder mehreren der Ansprüche 1 bis 3, **dadurch gekennzeichnet, dass** Impfkristalle mit einer mittleren Korngröße von 0,01 bis 30 µm eingesetzt werden.

5. Verfahren nach einem oder mehreren der Ansprüche 1 bis 4, **dadurch gekennzeichnet, dass** der wässrigen Mangansalzlösung mindestens ein Metallkation ausgewählt aus der Gruppe Co, V, Pb, Cr, Ti, Bi oder Sn in Mengen von 2 bis 10 Mol-% bezogen auf die Menge an eingesetzten Mn²⁺-Ionen zugesetzt wird.

6. Verfahren nach einem oder mehreren der Ansprüche 1 bis 5, **dadurch gekennzeichnet, dass** der getrocknete Niederschlag des erhaltenen Lithium-Mangan-Spinells bei 350 bis 600 °C über 1 bis 6 Stunden getempert wird.

## Claims

1. Process for the preparation of ternary lithium-manganese spinels by precipitation from aqueous manganese salt solutions, **characterized in that** it comprises dissolving a manganese salt in water, adding an oxidant, adding the mixture to an aqueous lithium hydroxide solution containing from 0.1 to 1% by weight, based on the content of LiOH employed, of seed crystals selected from the group consisting of activated carbon, Aerosil and spinel, and separating off, washing and heating the precipitate.

2. Process according to Claim 1, **characterized in that** a water-soluble manganese salt, such as manganese sulphate, manganese chloride, manganese acetate, manganese nitrate, or a mixture of these salts, is employed.

3. Process according to Claim 1 or 2, **characterized by** the use of hydrogen peroxide, sodium peroxide, sodium carbonate peroxohydrate or potassium peroxiydisulphate in amounts of from 1.5 to 2.0 mol%, based on the amount of Mn²⁺ ions employed, as an oxidant.

4. Process according to one or more of Claims 1 to 3, **characterized in that** seed crystals having a mean particle size of from 0.01 to 30 µm are employed.

5. Process according to one or more of Claims 1 to 4, **characterized in that** at least one metal cation selected from the group consisting of Co, V, Pb, Cr, Ti, Bi or Sn is added to the aqueous manganese salt solution in amounts of from 2 to 10 mol%, based on the amount of Mn²⁺ ions employed.

6. Process according to one or more of Claims 1 to 5, **characterized in that** the dried precipitate of the lithium-manganese spinel obtained is heated at from 350 to 600°C for from 1 to 6 hours.

## Revendications

1. Procédé de fabrication de spinelles de lithium-manganèse ternaires par précipitation à partir de solutions aqueuses de sels de manganèse,
**caractérisé en ce qu'**
un sel de manganèse est dissous dans de l'eau, mélangé à un agent d'oxydation, ajouté à une solution aqueuse d'hydroxyde de lithium qui contient par rapport à la fraction de LiOH utilisé 0,1 à 1 % en poids de germes cristallins choisis dans le groupe charbon actif, aérosil ou spinelle, et le précipité est séparé, lavé et recuit.

2. Procédé selon la revendication 1,
**caractérisé en ce que**
comme sel de manganèse soluble dans l'eau, on utilise du sulfate de manganèse, du chlorure de manganèse, de l'acétate de manganèse, du nitrate de manganèse ou un mélange de ces sels.

3. Procédé selon la revendication 1 ou 2,
**caractérisé par**
l'utilisation de peroxyde d'hydrogène, de peroxyde de sodium, de perox-hydrate de carbonate de sodium ou de peroxydisulfate de potassium en quantités de 1,5 à 2,0 % en moles par rapport à la quantité d'ions Mn²⁺ utilisés en tant qu'agent d'oxydation.

4. Procédé selon l'une quelconque ou plusieurs des revendications 1 à 3,
**caractérisé en ce qu'**
on utilise des germes cristallins d'une granulométrie moyenne de 0,01 à 30 µm.

5. Procédé selon l'une quelconque ou plusieurs des revendications 1 à 4,
**caractérisé en ce qu'**
on ajoute à la solution aqueuse de sel de manganèse au moins un cation métallique choisi dans le groupe Co, V, Pb, Cr, Ti, Bi ou Sn en quantités de 2 à 10 % molaire par rapport à la quantité d'ions Mn²⁺ utilisés.

6. Procédé selon l'une quelconque ou plusieurs des revendications 1 à 5,
**caractérisé en ce que**
le précipité séché de la spinelle de lithium-manganèse obtenue est recuit à une température de 350 à 600°C pendant 1 à 6 heures.
